# EUROPEAN PATENT APPLICATION

(11) **EP 4 763 597 A1**
(43) Date of publication of application: **24.06.2026**
(21) Application number: 24888879.4
(22) Date of filing: 08.07.2024
(51) Int. Cl.: B60L 58/10, H01M 10/42

(54) **BATTERY MANAGEMENT SYSTEM**

(30) Priority: 08.11.2023 KR 20230153716
(71) Applicant: LG Energy Solution, Ltd., Seoul 07335 (KR)
(72) Inventor: LEE, Sang Rae, Daejeon 34122 (KR)
(74) Representative: Plasseraud IP
(86) International application number: PCT/KR2024/009715
(87) International publication number: WO 2025/100682

(57) **Abstract**

The present invention provides a BMS having a master BMS and at least one slave BMS that receive power from an electric vehicle, wherein each of the master BMS and the slave BMS has first and second ground terminals, the first ground terminals of the master BMS and the slave BMS are connected to a ground terminal of the electric vehicle, the second ground terminal of the master BMS is connected to the first ground terminal of the master BMS, and the second ground terminal of the slave BMS is connected to the second ground terminal of the master BMS.

## Description

### TECHNICAL FIELD

The present invention relates to a battery management system, and more particularly, to a battery management system of an electric vehicle having a master BMS and a slave BMS.

### BACKGROUND ART

A secondary battery capable of charging and discharging, that is, a battery, is widely used as an energy source for mobile devices such as smart phones. Furthermore, the battery is used as an energy source for eco-friendly vehicles such as an electric vehicle and a hybrid electric vehicle proposed as a solution to air pollution caused by a gasoline vehicle and a diesel vehicle using fossil fuels. The types of applications using the battery are becoming very diverse, and it is expected that the battery will be applied to more fields and products than now in the future.

Currently commercialized available batteries include a nickel cadmium battery, a nickel hydrogen battery, a nickel zinc battery, and a lithium ion battery. Among these batteries, the lithium ion battery is spotlighted due to their advantages of free charge and discharge, very low self-discharge rate, and high energy density because the memory effect hardly occurs compared to the nickel-based battery. In addition, since the lithium ion battery can be manufactured to be lightweight in a small size, the lithium ion battery is used as a power source for mobile devices, and the use range thereof has been expanded as a power source for the electric vehicle, thereby drawing attention as a next-generation energy storage medium.

These batteries are generally used in the form of a battery pack rather than as a single battery cell. The battery pack includes at least one or more battery modules, and the battery module may be composed of a plurality of battery cells. The battery pack is being developed with high-capacity and high-voltage specifications so that it can be used for a longer time and driven more powerfully according to consumer demands. In addition, at least one battery pack may be installed in an electric vehicle, etc., and two or more battery packs may be installed depending on capacity and voltage thereof.

A battery management system (BMS) is provided to manage the overall state of battery cells, battery modules, or battery packs. The BMS checks the performance and state of the battery and performs battery diagnosis to ensure a stable operation of the battery. For the stable operation of the battery, a stable operation of the BMS should be prioritized, and this can be satisfied with the rigidity design of the BMS. There are many rigidity design methods, but the most basic method is through strengthening a reference potential, that is, a ground potential.

Meanwhile, in order to efficiently manage the battery pack that supplies high voltage and high output power to the electric vehicle, the BMS of the electric vehicle uses a master-slave BMS structure that uses a master BMS and at least one slave BMS. The master BMS communicates with the electric vehicle to check and diagnose the state of the battery, and the slave BMS monitors battery information and transmits the battery information to the master BMS.

The BMS of the electric vehicle, that is, the master BMS and slave BMS, share a driving voltage 12 V and reference potential GND from the electric vehicle and convert them into BMS driving power. That is, each of the master BMS and slave BMS are connected to a power line and and ground line of the electric vehicle, and receive the driving voltage through the power line and the reference potential through the ground line. However, if the ground line connecting the electric vehicle and the BMS is broken or the ground line is affected by noise, the operation of the BMS may be affected. That is, if the ground line is broken or affected by noise, the reference potential changes, and internal driving power of the BMS may change accordingly. Eventually, a problem of malfunction or misdiagnosis of the BMS may occur.

Related prior art of the present invention includes Korean patent publication No. 10-2019-0069923.
Korea Patent Registration No. 10-1799569
Korean Unexamined Patent Application Publication No. 10-2020-0031931

### DISCLOSURE OF THE INVENTION

### TECHNICAL PROBLEM

The present invention provides a BMS including a master BMS and at least one slave BMS of an electric vehicle.

The present invention provides a BMS of an electric vehicle that can strengthen a reference potential.

The present invention provides a BMS of an electric vehicle capable of maintaining a reference potential even in the event of a ground line disconnection or noise.

### TECHNICAL SOLUTION

A BMS according to an embodiment of the present invention is a BMS that includes a master BMS and at least one slave BMS that receive power from an electric vehicle, in which each of the master BMS and the at least one slave BMS includes a first ground terminal and second ground terminal, the first ground terminal of each of the master BMS and the at least one slave BMS is connected to a ground terminal of an electric vehicle, the second ground terminal of the master BMS is connected to the first ground terminal of the master BMS, and the second ground terminal of the at least one slave BMS is connected to the second ground terminal of the master BMS.

Each of the master BMS and the at least one slave BMS further includes a power terminal that receives driving power from the electric vehicle, respectively.

The BMS includes a power line connected to the electric vehicle and the power terminal of each of the master BMS and the at least one slave BMS, and a first ground line connected to the electric vehicle and the first ground terminal of each of the master BMS and the at least one slave BMS.

The BMS includes a second ground line connected to the second ground terminal of the master BMS and the second ground terminal of the at least one slave BMS.

The BMS includes a protection element connected to the second ground line.

On the second ground line, one protection element is provided or the protection element is provided in a number corresponding to the number of the at least one slave BMS.

A BMS according to another embodiment of the present invention is a BMS that includes a master BMS and at least one slave BMS, in which each of the master BMS and the at least one slave BMS includes a power terminal, a first ground terminal, and a second ground terminal, and the BMS includes a power line connecting a power terminal of the master BMS and a power terminal of the at least one slave BMS with external driving power, a first ground line connecting a first ground terminal of the master BMS and a first ground terminal of the at least one slave BMS with external reference power, and a second ground line connecting a second ground terminal of the master BMS and a second ground terminal of the at least one slave BMS, and he second ground terminal of the master BMS is connected to the first ground terminal of the master BMS.

The BMS includes a protection element connected to the second ground line.

On the second ground line, one protection element is provided or the protection element is provided in a number corresponding to the number of the at least one slave BMS.

### ADVANTAGEOUS EFFECTS

In the BMS of the electric vehicle according to embodiments of the present invention, each of the master BMS and the slave BMS may be provided with two ground terminals. That is, each of the master BMS and the slave BMS may have the first ground terminal connected to the ground terminal of the electric vehicle through the first ground line, and the second ground terminals connected to each other through the second ground line. In addition, the second ground terminal of the master BMS constitutes an internal ground connected to the first ground terminal of the master BMS, which enables reinforcement design by redundant grounding in which the ground of the master BMS and the ground of the slave BMS are separately connected.

Therefore, in the present invention, even if the first ground line is broken or affected by noise, the reference potential can be maintained because the second ground line is connected, thereby preventing malfunction and misdiagnosis of the BMS. That is, since the master BMS and the slave BMS each have first and second ground terminals and have a dual ground structure connected through the first ground line and second ground line, even if one ground line is broken or affected by noise, the other ground line can maintain the reference potential, thereby preventing malfunction or misdiagnosis of the BMS.

### BRIEF DESCRIPTION OF THE DRAWINGS

FIG. 1 is a block diagram for describing the main configuration of an electric vehicle according to an embodiment of the present invention.
FIG. 2 is a block diagram of a BMS including a master BMS and a slave BMS according to an embodiment of the present invention.
FIGS. 3 and 4 are schematic diagrams of a BMS for describing power and ground connections of the master BMS and the slave BMS according to embodiments of the present invention.
FIGS. 5 and 6 are schematic diagrams of a BMS for describing power and ground connections of a master BMS and slave BMSs according to modified examples of embodiments of the present invention.

### MODE FOR CARRYING OUT THE INVENTION

Hereinafter, embodiments of the present invention will be described in detail with reference to the accompanying drawings. However, the present invention is not limited to the embodiments disclosed below, but will be implemented in a variety of different forms, and these embodiments are provided only to complete the disclosure of the present invention and to fully inform those skilled in the art of the scope of the invention.

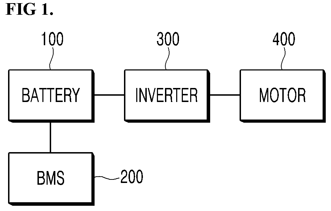

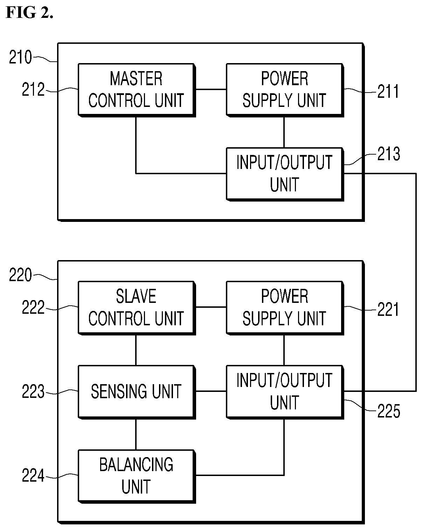

FIG. 1 is a block diagram for describing a main configuration of an electric vehicle according to an embodiment of the present invention, and FIG. 2 is a block diagram of a BMS including a master BMS and a slave BMS according to an embodiment of the present invention.

Referring to FIGS. 1 to 2, an electric vehicle according to an embodiment of the present invention may include a battery 100 that can be charged and discharged and provides electrical energy for driving the electric vehicle, a battery management system (BMS) 200 that manages the battery 100, an inverter 300 that allows the battery 100 to be charged or discharged, and a motor 400 that drives an eco-friendly vehicle by driving wheels according to electricity from the battery 100. The configuration of this electric vehicle will be described in more detail for each component as follows.

### 1. Battery

The battery 100 can be charged and discharged, and is an electrical energy source that provides energy to an eco-friendly vehicle to drive the eco-friendly vehicle. Here, the battery 100 may include at least one battery pack, each of the at least one battery pack may include a plurality of battery modules, and the battery module may include a plurality of battery cells that can be charged and discharged. That is, the battery 100 includes a plurality of battery cells, the plurality of battery cells may be grouped into a predetermined unit to form the battery module, and a plurality of battery modules may form one battery pack. Here, in the embodiment of the present invention, at least one battery pack may be included in the battery. Meanwhile, a plurality of battery cells may be connected in series and/or parallel in various ways to meet the specifications of an eco-friendly vehicle. Of course, a plurality of battery packs each including a plurality of battery cells may also be connected in series and/or parallel. Here, the battery cell may include a lithium ion battery. However, the battery cell may be composed of not only a lithium-ion battery, but also a lithium polymer battery, a nickel-cadmium battery, a nickel-hydrogen battery, a nickel-zinc battery, etc.

### 2. BMS

The BMS 200 estimates a state of the battery 100 and manages the battery 100 using estimated state information. This BMS 200 may include a master BMS 210 and at least one slave BMS 220, as illustrated in FIG. 2. The at least one slave BMS 220 may be, for example, provided for each of a plurality of battery modules or a battery pack and sense the voltage, current, temperature, etc. of a plurality of battery cells within the battery module or battery pack. The master BMS 210 may receive these pieces of data from the slave BMS 220 and estimate a state of charge (SOC) and state of health (SOH) of the battery. In addition, the slave BMS 220 may charge or discharge the battery cell under the control of the master BMS 210 and control cell balancing to balance the states of charge of the plurality of battery cells. That is, the battery cells having a relatively high state of charge may be discharged and the battery cells having a relatively low state of charge may be charged.

### 2.1. Master BMS

As shown in FIG. 2, the master BMS 210 may include a power supply unit 211 that provides power, a master control unit 212 for controlling the slave BMS 220 and managing the state of charge of the entire battery 100, and an input/output unit 213 for inputting and outputting data. In addition, the master BMS 210 may further include a storage unit (not shown) that stores data related to a master function and a current sensing unit (not shown) that senses a charge/discharge current of the battery pack.

The power supply unit 211 is provided within the master BMS 210 and provides power to components constituting the master BMS 210. This power supply unit 211 may receive predetermined power input from the electric vehicle. In addition, at least one of the master control unit 212, the input/output unit 213, the storage unit, and the current sensing unit that constitute the master BMS 210 may have different driving power. The power supply unit 211 may generate at least one or more power having different potentials for driving respective components within the master BMS 210 using driving power from the electric vehicle.

The master control unit 212 controls driving of the slave BMS 220 and manages the state of charge of the entire battery. That is, the master control unit 212 may control on/off of the slave BMS 220 by supplying a control signal to the slave BMS 220 through the input/output unit 213. In addition, the master control unit 212 may estimate the SOC, the SOH, etc. of the battery using data such as the current and voltage of the battery module or battery cell input from the slave BMS 220 through the input/output unit 213. In order to estimate the SOC and SOH of such a battery, a SOC estimation unit (not shown) and an SOH estimation unit (not shown) may be respectively provided within the master control unit 212. The SOH estimation unit estimates a capacity of the battery 100 to predict the degree of degradation of the battery 100. In this case, the estimated capacity of the battery 100 may be used by the SOC estimation unit when estimating the SOC of the battery 100. In addition, the SOC estimation unit may estimate the SOC of the battery 100 using the capacity of the battery 100 estimated by the SOH estimation unit and the current of the battery module or battery cell measured by the slave BMS 220.

The input/output unit 213 is provided within the master BMS 210 for data input/output between the master BMS 210 and the slave BMS 220. That is, the input/output unit 213 receives a signal output from the master control unit 212 and transmits the signal to the slave BMS 220, and receives data transmitted from the slave BMS 220 and transmits the data to the master control unit 212.

### 2.2. Slave BMS

As illustrated in FIG. 2, the slave BMS 220 may include a power supply unit 221 that supplies power to components of the slave BMS 220, a slave control unit 222 that controls the components constituting the slave BMS 220, a sensing unit 223 that senses the state, such as a voltage, a current, etc., of the battery module or battery cell, a cell balancing unit 224 that performs cell balancing to reduce a voltage difference between cells for each battery cell, and an input/output unit 225 for inputting and outputting data with the master BMS 210. In addition, the slave BMS 220 may further include a storage unit (not illustrated) that stores data related to a slave function.

The power supply unit 221 is provided within the slave BMS 220 and provides power to components constituting the slave BMS 220. This power supply unit 221 may receive predetermined power input from the electric vehicle. In addition, the power supply unit 221 may receive predetermined power input from the electric vehicle and generate power for driving each component within the slave BMS 220. That is, at least one of the slave control unit 222, the sensing unit 223, the cell balancing unit 224, the input/output unit 225, and the storage unit may have different driving power, the power supply unit 221 may generate at least one or more power having different potentials for driving each component within the slave BMS 220 using driving power from the electric vehicle. This power supply unit 221 may be driven according to a control signal supplied from the master BMS 210 to supply power to the slave BMS 220. That is, the control signal from the master BMS 210 may be supplied to the power supply unit 221 through the input/output unit 225 to drive the power supply unit 221 to supply power to the slave BMS 220.

The slave control unit 222 controls and manages the components constituting the slave BMS 220. That is, the slave control unit 222 drives the power supply unit 221 according to the control signal supplied from the master BMS 210 to enable the slave BMS 220, and supplies the voltage and current measured by the sensing unit 223 to the master BMS 210 through the input/output unit 225. In addition, the slave control unit 222 controls the cell balancing unit 224 to balance the corresponding cell.

The sensing unit 223 may sense the state, such as a voltage, a current, etc., of the battery module or battery cell. The sensing unit 223 may include a voltage sensor that senses a voltage of the battery module or battery cell and a current sensor that senses the current thereof. The voltage sensor may sense the voltage output from the battery module and may sense the voltage output from the battery cell. In addition, the voltage sensor may measure a stabilized voltage from the battery module or battery cell after a predetermined period of time has elapsed after the slave BMS 220 is enabled. Meanwhile, the voltage sensor is driven according to predetermined power supplied from the power supply unit 221, and the voltage of the battery module or battery cell measured by the voltage sensor may be transmitted to the master BMS 210 through the input/output unit 225 under the control of the slave control unit 222. At least one current sensor is provided in the battery module to sense the current of the battery module, the current sensor is driven according to predetermined power supplied from the power supply unit 221, and the voltage of the battery module or battery cell measured by the current sensor may be transmitted to the master BMS 210 through the input/output unit 225 under the control of the slave control unit 222.

The cell balancing unit 224 performs cell balancing on at least one battery cell selected under the control of the slave control unit 222. That is, when the voltage of a certain battery cell is higher or lower than the average voltage, the cell balancing unit 224 performs balancing of the battery cell under the control of the slave controller 222. For example, the cell balancing unit 224 may be configured by connecting a switch and a load resistor in series between both ends of each battery cell. Accordingly, the switch may be turned on and off according to the control signal from the slave control unit 222 to discharge the voltage charged in the battery cell through the load resistor.

The input/output unit 225 transmits the voltage and current measured by the sensing unit 223 to the master BMS 210 under the control of the slave control unit 222, and receives a signal output from the master BMS 210 and transmits the signal to the slave control unit 222. This input/output unit 225 may include a conversion unit (not illustrated) connected to the voltage sensing unit and the current sensing unit to receive analog data from these sensing units and convert the analog data into digital data, an output unit (not illustrated) that outputs the digital data converted by the conversion unit to the master BMS 210, and an input unit (not illustrated) that receives data output from the master BMS 210 and transmits the data to the slave control unit 222. In addition, a buffer unit (not illustrated) for temporary storage of data may be provided within the input/output unit 225.

### 3. Inverter

The inverter 300 drives the motor 400 so as to enable driving of an eco-friendly vehicle. That is, the inverter 300 converts DC power of the battery 100 into AC power for use in the motor 400, maintains accurate charging, and affects the rotation speed and torque control of the motor 400. Of course, an eco-friendly vehicle using a DC motor does not need an inverter, but in order to use a high-performance AC motor, the inverter that can freely change the frequency, voltage, rotation speed, and torque is necessary.

### 4. Motor

The motor 400 may provide driving force to the eco-friendly vehicle. That is, the motor 400 may provide wheel driving force for the eco-friendly vehicle to move using energy supplied from the battery 100 through the inverter 300. This motor 400 may be configured with, for example, at least one of an induction motor, a permanent magnet synchronous motor, and a reluctance motor. Meanwhile, the eco-friendly vehicle may further include a motor controller for controlling the motor 400. The motor controller detects an accelerator pedal operation amount and speed and controls the torque and rotation speed of the motor 400 according to conditions such as the vehicle speed and load so as to bring about the intended torque change therefrom. On a DC motor, current controls torque and voltage controls speed, while on an AC motor, amplitude controls torque and frequency controls speed.

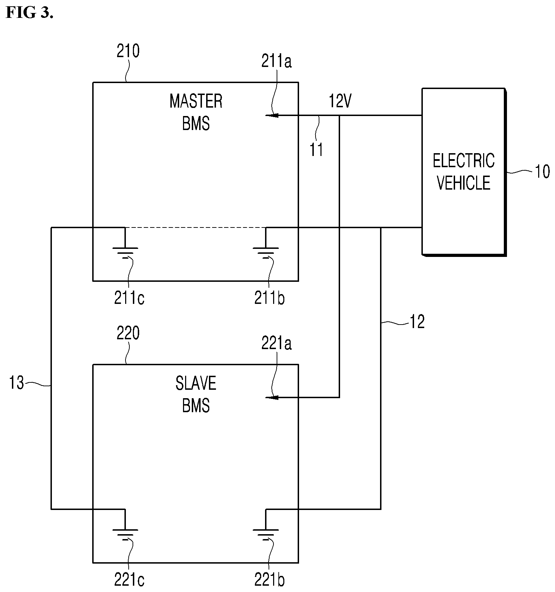

FIG. 3 is a schematic diagram of a BMS for describing power and ground connections of a master BMS and a slave BMS according to an embodiment of the present invention.

Referring to FIG. 3, the master BMS 210 may include a power terminal 211a that receives driving power, i.e., external power, from the electric vehicle 10, a first ground terminal 211b that receives a reference potential (i.e., ground potential) from the electric vehicle 10, and a second ground terminal 211c that is spaced apart from the first ground terminal 211b and is connected to the first ground terminal 211b. In addition, the power terminal 211a may be connected to the electric vehicle 10 through the power line 11 and receive driving power from the electric vehicle 10, and the first ground terminal 211b may be connected to the electric vehicle 10 through the first ground line 12 and receive a reference potential from the electric vehicle 10. In addition, the second ground terminal 211c of the master BMS 210 may be connected to the first ground terminal 211b through an internal connection wiring.

The power terminal 211a is connected to the electric vehicle 10 through the power line 11 and receives driving power from the electric vehicle 10. Here, the power terminal 211a may be a part of the power supply unit 211 of the master BMS 210 described using FIG. 2. That is, the power supply unit 211 of the master BMS 210 receives driving power from the electric vehicle 10 through the power terminal 211a and provides power to the components constituting the master BMS 210. Here, the driving power may be 12 V, for example.

The first ground terminal 211b may be connected to the electric vehicle 10 through the first ground line 12 and receive a reference potential (i.e., ground power) from the electric vehicle 10. That is, the first ground terminal 211b of the master BMS 210 may be connected to a ground terminal of the electric vehicle 10 through the first ground line 12. Here, the first ground terminal 211b may be a part of the power supply unit 211 of the master BMS 210 described using FIG. 2. Of course, the first ground terminal 211b may be provided within the master BMS 210 separately from the power supply unit 211.

The second ground terminal 211c is provided within the master BMS 210 and may be provided separately from the first ground terminal 211b. Of course, the second ground terminal 211c may be a part of the first ground terminal 211b. That is, the first and second ground terminals 211b and 211c may be tied to a common ground, or may be spaced apart from each other and connected through the internal connection wiring. Here, the second ground terminal 211c may be a part of the power supply unit 211 of the master BMS 210 described using FIG. 2. Of course, the second ground terminal 211c may be provided within the master BMS 210 separately from the power supply unit 211.

Referring to FIG. 3, the slave BMS 220 may include a power terminal 221a that receives driving power, i.e., external power, from the electric vehicle 10, a power terminal 221a that receives a reference potential (i.e., ground potential) from the electric vehicle 10, and a second ground terminal 221c spaced apart from the first ground terminal 221b. In addition, the power terminal 221a may be connected to the electric vehicle 10 through the power line 11 and receive driving power from the electric vehicle 10, and the first ground terminal 221b may be connected to the electric vehicle 10 through the first ground line 12 and receive a reference potential from the electric vehicle 10. That is, the power terminal 221a of the slave BMS 220 and the power terminal 211a of the master BMS 210 are connected to the electric vehicle 10 through the power line 11 and and receive the same voltage, for example, 12 V, from the electric vehicle 10. In addition, the first ground terminal 221b of the slave BMS 220 and the first ground terminal 211b of the master BMS 210 may be connected to the electric vehicle 10 through the first ground line 12 and receive the reference potential from the electric vehicle 10. In addition, the second ground terminal 221c of the slave BMS 220 may be connected to the second ground terminal 211c of the master BMS 210 through a second ground line 13.

The power terminal 221a is connected to the electric vehicle 10 through the power line 11 and receives driving power from the electric vehicle 10. Here, the power terminal 221a may be a part of the power supply unit 221 of the slave BMS 220 described using FIG. 2. That is, the power supply unit 221 of the slave BMS 220 receives driving power from the electric vehicle 10 through the power terminal 221a and provides power to the components constituting the slave BMS 220. Here, the driving power may be 12 V, for example.

The first ground terminal 221b of the slave BMS 220 may be connected to the electric vehicle 10 through the first ground line 12 and receive the reference potential (i.e. ground power) from the electric vehicle 10. That is, the first ground terminal 221b of the slave BMS 220 may be connected to the ground terminal of the electric vehicle 10 through the first ground line 12. Here, the first ground terminal 221b may be a part of the power supply unit 221 of the slave BMS 220 described using FIG. 2. Of course, the first ground terminal 221b may be provided within the slave BMS 220 separately from the power supply unit 221.

The second ground terminal 221c is provided within the slave BMS 220 and may be provided separately from the first ground terminal 221b. The second ground terminal 221c may be a part of the power supply unit 221 of the slave BMS 220 described using FIG. 2. In this case, when the second ground terminal 221c is configured as a part of the power supply unit 221, the second ground terminal 221c may be provided to be spaced apart from the first ground terminal 221b. Of course, the second ground terminal 221c may be provided within the slave BMS 220 separately from the power supply unit 221. In addition, the second ground terminal 221c may be connected to the second ground terminal 211c of the master BMS 210 through the second ground line 13.

As described above, in the BMS of the electric vehicle according to an embodiment of the present invention, each of the master BMS 210 and the slave BMS 220 may include two ground terminals. That is, the master BMS 210 and the slave BMS 220 may include the first ground terminals 211b and 221b respectively connected to the ground terminal of the electric vehicle 10 through the first ground line 12, and the second ground terminals 211c and 221c respectively connected to the second ground line 13. In addition, the second ground terminal 211c of the master BMS 210 configures an internal ground connected to the first ground terminal 211b, thereby enabling a reinforceed design by redundant grounding in which the ground of the master BMS 210 and the ground of the slave BMS 220 are separately connected.

Therefore, in the present invention, even if the first ground line 12 is broken or affected by noise, the reference potential may be maintained because the second ground line 13 is connected, thereby preventing malfunction and misdiagnosis of the BMS. That is, since the master BMS 210 and the slave BMS 220 have a dual ground structure in which the master BMS 210 and the slave BMS are provided with the first and second ground terminals 211b and 211c and the first and second ground terminals 221b and 221c, respectively, and are connected to each other through the first and second ground lines 12 and 13, even if one of the ground lines is broken or affected by noise, the other ground line may maintain the reference potential, thereby capable of preventing malfunction or misdiagnosis of the BMS.

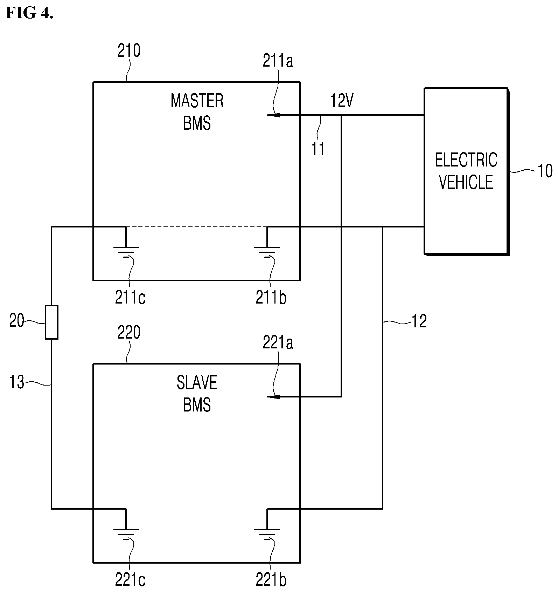

FIG. 4 is a schematic diagram of a BMS for describing power and ground connections of the master BMS and the slave BMS according to another embodiment of the present invention.

As illustrated in FIG. 4, the other embodiment of the present invention further includes a protection element 20 on the second ground line 13 compared to the embodiment of the present invention described using FIG. 3. The protection element 20 may be provided to protect a circuit from noise applied through the second ground line 13. That is, when noise from the outside flows through the second ground line 13, the second ground line 13 may be broken or noise flow into the second ground terminal 211c of the master BMS 210 and the second ground terminal 221c of the slave BMS 220, which causes the ground potential to change. However, by connecting the protection element 20 to the second ground line 13, noise through the second ground line 13 can be blocked, thereby capable of preventing breakage of the second ground line 13 or noise inflow into the second ground terminal of each of the master BMS and the slave BMS. In this case, the protection element 20 may use noise blocking components such as chip beads. Meanwhile, although not illustrated, the protection element 20 may also be connected to the first ground line 12 and the protection element 20 may also be connected to the power line 11.

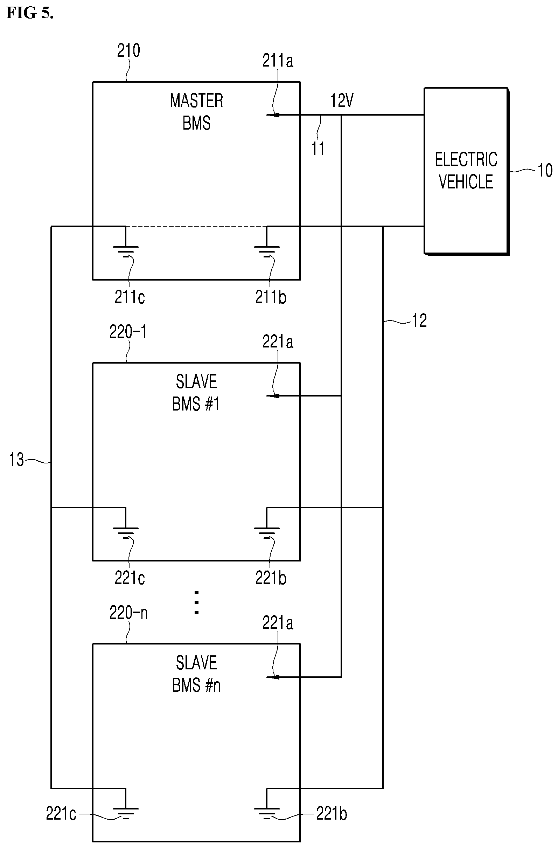

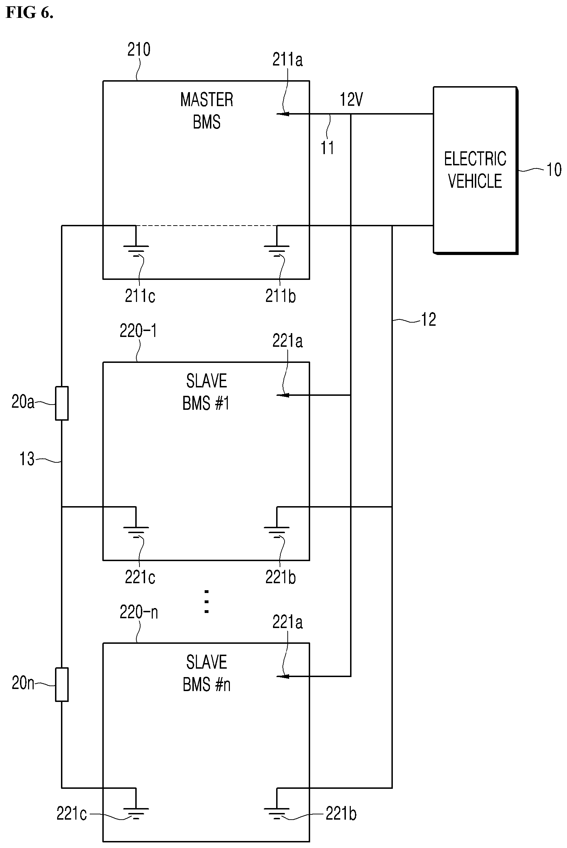

FIGS. 5 and 6 are schematic diagrams of a BMS of an electric vehicle including a master BMS and a slave BMS according to modified examples of embodiments of the present invention.

FIG. 5 is a modified example of the BMS according to the embodiment of the present invention described using FIG. 3, and may be provided with a plurality of slave BMSs 220-1 to 220-n. That is, the BMS may include one master BMS 210 and two or more slave BMSs 220-1 to 220-n. The plurality of slave BMSs 220-1 to 220-n may respectively manage a plurality of battery packs. That is, the battery 100 may include a plurality of battery packs, and the plurality of slave BMSs 220-1 to 220-n may be provided to respectively manage the plurality of battery packs. Even when the battery 100 is configured with the plurality of slave BMSs 220-1 to 220-n, each of the slave BMSs 220-1 to 220-n may be provided with a power terminal 221a connected to the electric vehicle 10 through a power line 11, a first ground terminal 221b connected to the electric vehicle 10 through a first ground line 12, and a second ground terminal 221c connected to a second ground terminal 211c of a master BMS 210 through a second ground line 13.

FIG. 6 is a modified example of the BMS according to another embodiment of the present invention described using FIG. 4. A plurality of slave BMSs 220-1 to 220-n may be provided, and at least one protection element 20a to 20n may be provided on a second ground line 13. That is, the protection elements 20a to 20n may be provided one by one on the second ground line 13, and each of the protection elements 20a to 20n may be provided on the second ground line 13 in a number corresponding to the number of the slave BMSs 220-1 to 220-n. By providing at least one of the protection elements 20a to 20n on the second ground line 13 connecting a second ground terminal 211c of the master BMS 210 and a second ground terminal 221c of the plurality of slave BMSs 220-1 to 220-n, noise flowing in through the second ground line 13 may be blocked.

Although the technical idea of the present invention as described above has been specifically described according to the embodiments described above, it should be noted that the embodiments described above are for description thereof and not for limitation. In addition, those skilled in the art of the present invention will understand that various embodiments are possible within the scope of the technical idea of the present invention.

The names of each part of the drawings used in the present invention are as follows.
100: battery
200: BMS
300: inverter
400: motor
210: master BMS
220: slave BMS
10: electric vehicle
11: power line
12: first ground line
13: second ground line
20: protection element
211a, 211b, 211c: power terminal, first ground terminal, and second ground terminal of master BMS
221a, 221b, 221c: power terminal, first ground terminal, and second ground terminal of slave BMS

## Claims

1. A battery management system BMS comprising a master BMS and at least one slave BMS that receive power from an electric vehicle, wherein
each of the master BMS and the at least one slave BMS comprises a first ground terminal and second ground terminal,
the first ground terminal of each of the master BMS and the at least one slave BMS is connected to a ground terminal of an electric vehicle,
the second ground terminal of the master BMS is connected to the first ground terminal of the master BMS, and
the second ground terminal of the at least one slave BMS is connected to the second ground terminal of the master BMS.

2. The BMS of claim 1, wherein
each of the master BMS and the at least one slave BMS further comprises a power terminal that receives driving power from the electric vehicle, respectively.

3. The BMS of claim 2, further comprising:
a power line connected to the electric vehicle and the power terminal of each of the master BMS and the at least one slave BMS; and
a first ground line connected to the electric vehicle and the first ground terminal of each of the master BMS and the at least one slave BMS.

4. The BMS of claim 3, further comprising a second ground line connected to the second ground terminal of the master BMS and the second ground terminal of the at least one slave BMS.

5. The BMS of claim 4, further comprising:
a protection element connected to the second ground line.

6. The BMS of claim 5, wherein
on the second ground line, one protection element is provided or the protection element is provided in a number corresponding to the number of the at least one slave BMS.

7. A battery management system BMS comprising a master BMS and at least one slave BMS, wherein
each of the master BMS and the at least one slave BMS comprises a power terminal, a first ground terminal, and a second ground terminal,
the BMS comprises
a power line connecting a power terminal of the master BMS and a power terminal of the at least one slave BMS with external driving power,
a first ground line connecting a first ground terminal of the master BMS and a first ground terminal of the at least one slave BMS with external reference power, and
a second ground line connecting a second ground terminal of the master BMS and a second ground terminal of the at least one slave BMS, and
the second ground terminal of the master BMS is connected to the first ground terminal of the master BMS.

8. The BMS of claim 6, further comprising:
a protection element connected to the second ground line.

9. The BMS of claim 8, wherein
on the second ground line, one protection element is provided or the protection element is provided in a number corresponding to the number of the at least one slave BMS.
